(19) Europäisches Patentamt / European Patent Office / Office européen des brevets

(11) **EP 2 130 595 B1**

(12) **EUROPEAN PATENT SPECIFICATION**

(45) Date of publication and mention
of the grant of the patent:
**11.02.2015 Bulletin 2015/07**

(21) Application number: **08022571.7**

(22) Date of filing: **30.12.2008**

(51) Int Cl.:
*B01J 35/04* (2006.01)     *B01J 29/00* (2006.01)
*B01D 53/92* (2006.01)     *F01N 3/00* (2006.01)
*B01D 53/94* (2006.01)     *B01J 29/76* (2006.01)
*B01J 35/10* (2006.01)     *C04B 38/00* (2006.01)
*F01N 3/022* (2006.01)     *F01N 3/28* (2006.01)
*B01D 46/24* (2006.01)

(54) **Honeycomb structure**

Wabenstruktur

Structure en nid d'abeille

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **20.05.2008 PCT/JP2008/059263**

(43) Date of publication of application:
**09.12.2009 Bulletin 2009/50**

(73) Proprietor: **Ibiden Co., Ltd.**
**Ogaki-shi, Gifu 503-8604 (JP)**

(72) Inventors:
 • **Ohno, Kazushige**
 **Gifu 501-0695 (JP)**

 • **Kunieda, Masafumi**
 **Gifu 501-0695 (JP)**
 • **Ido, Takahiko**
 **Gifu 501-0695 (JP)**

(74) Representative: **Hoffmann Eitle**
**Patent- und Rechtsanwälte PartmbB**
**Arabellastraße 30**
**81925 München (DE)**

(56) References cited:
**EP-A- 1 847 320     EP-A- 1 852 184**
**WO-A-01/49409     JP-A- 2004 024 026**
**JP-A- 2004 202 426**

**Description**

**BACKGROUND OF THE INVENTION**

1. Field of the Invention

The present invention relates to a honeycomb structure.

2. Description of the Related Art

Many technologies have been developed for treating automotive exhaust gasses. However, since the amount of traffic has been increased, reducing the automotive exhaust gasses has not been sufficiently performed. The automotive exhaust gas emission control will be further tightened in Japan and the world. In the automotive exhaust gas emission control, NOx control in diesel vehicle exhaust gasses has been severely tightened. Conventionally, the amount of NOx has been reduced by controlling an engine combustion system, however, only controlling the engine combustion system is not sufficient. In order to meet the control, as a diesel vehicle NOx treating system, a NOx reduction system called an SCR system which uses ammonia as a reducing agent has been proposed.

As a catalyst carrier which is used in the system, a honeycomb structure is known. In Patent Document 1, a honeycomb structure formed of honeycomb units is disclosed. In forming the honeycomb unit, a material is prepared by mixing γ alumina, ceria, zirconia, zeolite, and the like with inorganic fibers and an inorganic binder, the mixed material is molded into a honeycomb shape, and the honeycomb-shaped molded body is fired; with this, the honeycomb unit is formed.

In Patent Document 2, a NOx treating method is disclosed in which NOx in diesel engine exhaust gases is reduced by using ammonia. In the method, a honeycomb catalyst is used in which an equivalent diameter of a through hole is 1.5 to 5 mm, the thickness of cell walls is 0.3 to 0.9 mm, and a pore volume in a specific pore range of all the pore volume is 40% or more. This honeycomb-shpaed catalyst is said to be able to have sufficient strength and sufficient NOx treating efficiency.

[Patent Document 1] WO2005/063653
[Patent Document 2] Japanese Patent 2675321

However, in the honeycomb structure of Patent Document 1, in a case where the honeycomb unit is formed by using zeolite as the main material while molding and firing are applied to the material, there is a risk that the strength of the honeycomb unit is not sufficiently maintained when the amount of zeolite is increased. Consequently, in some cases, the honeycomb structure formed of the honeycomb units cannot maintain a function as the NOx treating catalyst for the automotive exhaust gasses, in the SCR system.

In the honeycomb catalyst of Patent Document 2, the strength of the honeycomb catalyst is maintained by causing the thickness of the cell wall to be 0.3 mm or more. However, when the thickness of the cell wall is increased, NOx gasses in the exhaust gasses are not sufficiently penetrated into the inside of the cell wall, and there is a risk that all the cell walls are not effectively utilized in an exhaust gas treating reaction. In order to solve the problem, when desirable treating efficiency is to be obtained for automotive exhaust gasses, an effective catalyst region must be increased; consequently, the size of the honeycomb catalyst must be large. Since the honeycomb catalyst is required to be small-sized and light weight, the honeycomb catalyst has a problem to be used as a NOx treating catalyst for the automotive exhaust gasses.

**SUMMARY OF THE INVENTION**

The present invention may provide a honeycomb structure which has strength to be able to perform a function as an automotive exhaust gas treating catalyst when being installed in an automobile and can effectively perform high treating efficiency for automotive exhaust gasses with a small size and light weight.

According to one aspect of the present invention, there is provided a honeycomb structure. The honeycomb structure includes a honeycomb unit containing zeolite and an inorganic binder and having a shape in which plural cells extending from one end to the another end along the long length direction of the honeycomb unit are separated by cell walls.

The honeycomb unit includes inorganic fibers

An amount of zeolite contained per apparent unit volume of the honeycomb unit is 230 g/L or more, and mathematical formulae [1] and [2] are satisfied when the thickness of the cell wall is defined as X mm, and the porosity of the cell wall is defined as Y%.

$$40X + 20 \leq Y \leq 40X + 30 \quad \cdots \quad [1]$$

$$0.15 \leq X \leq 0.35 \quad \cdots \quad [2]$$

According to another aspect of the present invention, the amount of zeolite contained per apparent unit volume of the honeycomb unit is 270 g/L or less.

According to another aspect of the present invention, an aperture ratio of the honeycomb unit is 50% to 65%.

According to another aspect of the present invention, the zeolite includes at least one of β-type zeolite, Y-type zeolite, ferrierite, ZSM-5-type zeolite, mordenite, faujasite, zeolite A, and zeolite L.

According to another aspect of the present invention, a mole ratio of silica to alumina (silica/alumina) in the zeolite is 30 to 50.

According to another aspect of the present invention, the zeolite is ion-exchanged zeolite by using at least one of Fe, Cu, Ni, Co, Zn, Mn, Ti, Ag, and V.

According to another aspect of the present invention, the honeycomb unit includes at least one of alumina particles, titania particles, silica particles, zirconia particles, and a precursor of the above particles.

According to another aspect of the present invention, the inorganic binder includes at least one of alumina sol, silica sol, titania sol, liquid glass, meerschaum sol, and attapulgite sol.

According to another aspect of the present invention, the inorganic fibers include at least one of alumina fibers, silica fibers, silicon carbide fibers, silica-alumina fibers, glass fibers, potassium titanate fibers, and aluminum borate fibers.

According to another aspect of the present invention, plural honeycomb units are adhered together by interposing an adhesive.

According to an embodiment of the present invention, a honeycomb structure can be realized which has strength to be able to perform a function as an automotive exhaust gas treating catalyst when being installed in an automobile and can effectively perform high treating efficiency for automotive exhaust gasses with a small size and light weight.

Features and advantages of the present invention will become apparent from the following detailed description when read in conjunction with the accompanying drawings.

## BRIEF DESCRIPTION OF THE DRAWINGS

FIG. 1A is a perspective view of a honeycomb structure formed of plural honeycomb units according to an embodiment of the present invention;

FIG. 1B is a perspective view of a honeycomb structure formed of a single honeycomb unit according to the embodiment of the present invention;

FIG. 2 is a perspective view of the honeycomb unit of which the honeycomb structure shown in FIG. 1A is formed; and

FIG. 3 is a graph showing a relationship between a thickness of a cell wall and porosity of the cell wall in the honeycomb units of examples and comparative examples in the embodiment of the present invention.

## DETAILED DESCRIPTION OF THE PREFERRED EMBODIMENT

A honeycomb structure according to an embodiment of the present invention includes one or more honeycomb units containing zeolite and an inorganic binder and having a shape in which plural cells extending from one end to the another end along the long length direction of the honeycomb unit separated by cell walls are included. In the honeycomb unit, an amount of zeolite contained per apparent unit volume is 230 g/L or more, when the thickness of the cell wall is defined as X mm, and the porosity of the cell wall is defined as Y%, Mathematical Formulae [1] and [2] are satisfied.

$$40X + 20 \leq Y \leq 40X + 30 \quad \cdots \quad [1]$$

$$0.15 \leq X \leq 0.35 \quad \cdots \quad [2]$$

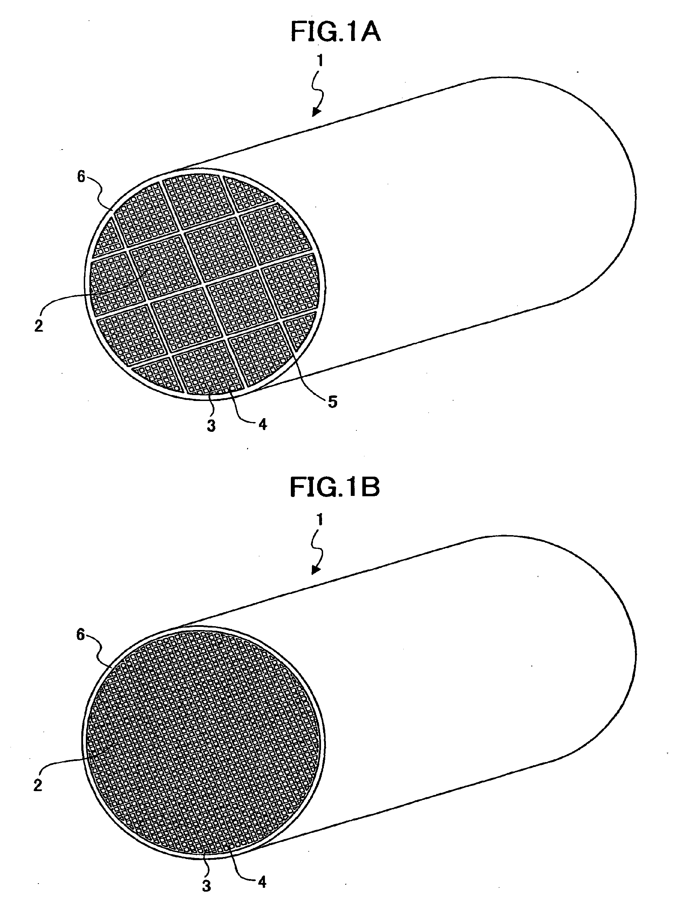

The honeycomb structure according to the embodiment of the present invention includes one or more fired honeycomb units in which the plural cells extending from one end to the another end along the long length direction of the honeycomb unit are separated by the cell walls. An example of the honeycomb structure is shown by a perspective view of FIG. 1A. In a honeycomb structure 1 shown in FIG. 1A, plural honeycomb units 2 are arrayed by being adhered together by adhesive layers 5. In each of the honeycomb units 2, the long length directions of cells 3 are arrayed in parallel.

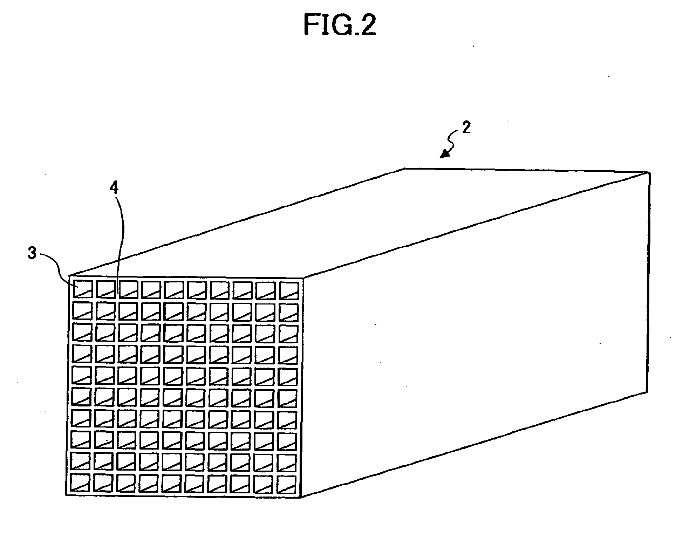

It is preferable that the side surface (the surface parallel to the long length direction of the cells 3) of the honeycomb structure 1 be covered with a coating material layer 6 so as to maintain the strength of the honeycomb structure 1. As exemplified in a perspective view of FIG. 2, the honeycomb unit 2 of which the honeycomb structure 1 is formed includes the plural cells 3 extending in the long length direction of the honeycomb unit 2 and cell walls 4 for separating the plural cells 3.

In the honeycomb unit 2 of the honeycomb structure 1 according to the embodiment of the present invention, it is preferable that the amount of zeolite contained per apparent unit volume be 230 g/L or more, more preferably, 270 g/L or less, and still more preferably, 245 to 270 g/l. When the amount of zeolite contained per apparent unit volume is less than 230 g/L, the NOx treating efficiency is lowered. In addition, when the amount of zeolite contained per apparent unit volume is more than 270 g/L, the strength of the honeycomb unit 2 and the honeycomb structure 1 may not be maintained.

As described above, in the honeycomb unit 2 of the honeycomb structure 1 according to the embodiment of the present invention, the thickness X mm of the cell wall 4 and the porosity Y% of the cell wall 4 satisfy Mathematical Formula [1] in which $40X + 20 \leq Y \leq 40X + 30$ and Mathematical Formula [2] in which $0.15 \leq X \leq 0.35$.

Generally, a NOx treating catalyst for automotive exhaust gasses using a honeycomb structure must be small-sized and light weight, must have sufficient strength against vibrations and stresses caused by driving an automobile, and must have sufficient NOx treating efficiency.

The inventors of the present invention have studied that the amount of zeolite contained, the thickness of the cell wall, and the porosity of the cell wall influence the strength and the catalyst efficiency which are the basic units of the honeycomb structure. In order to increase the strength of the honeycomb unit, it is conceivable that the amount of zeolite contained is lowered, the thickness of the cell wall is caused to be great, and the porosity of the cell wall is caused to be small.

However, in order to increase the catalyst efficiency of the cell wall having a catalyst action, the amount of zeolite contained must be increased. In addition, in order to obtain a small-sized and light weight honeycomb unit (honeycomb structure), the thickness of the cell wall must be thin and the porosity of the cell wall must be large so that all the cell walls can be efficiently used as the catalyst.

The inventors of the present invention have found a honeycomb structure obtained from a honeycomb unit suitable as an automotive catalyst for treating NOx in diesel exhaust gasses satisfies Mathematical Formula [1] by quantitatively studying the above parameters.

It is preferable that the thickness of the cell wall 4 of the honeycomb unit 2 be 0.15 mm or more and 0.35 mm or less, and more preferably, 0.15 mm or more and 0.27 mm or less.

When the thickness of the cell wall 4 is less than 0.15 mm, the sufficient strength of the honeycomb unit 2 may not be maintained. In particular, when the thickness of the cell wall 4 is too thin, the breaking strength of the cell wall 4 is lowered, rather than the bending strength of the honeycomb unit 2 is lowered. In addition, when the thickness of the cell wall 4 is more than 0.35 mm, in some cases, the exhaust gasses hardly penetrate into the inside of the call wall 4, and the NOx treating efficiency may be lowered.

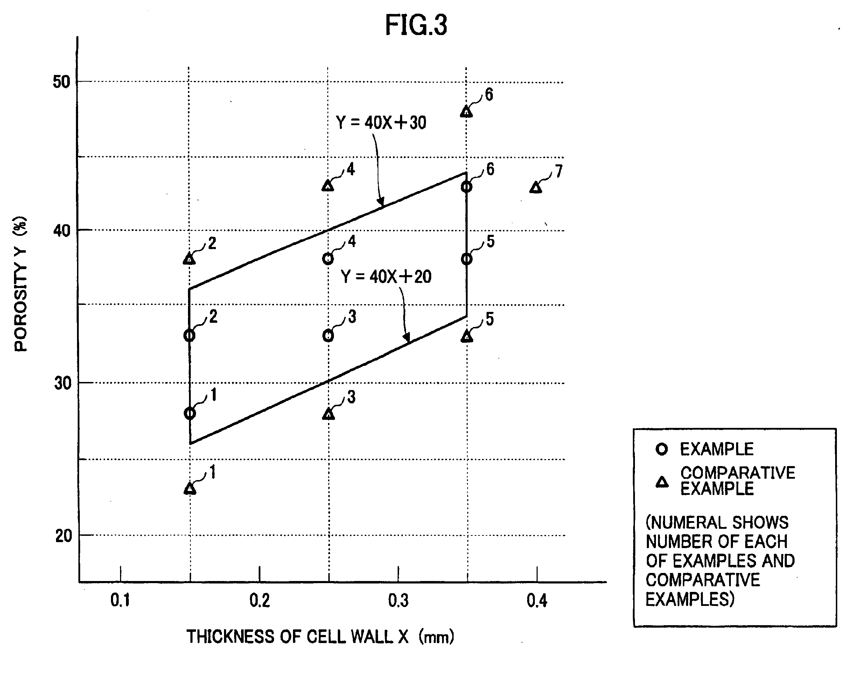

As shown in FIG. 3, when the honeycomb unit 2 of the honeycomb structure 1 according to the embodiment of the present invention is in a region satisfying both of Mathematical Formulae [1] and [2], it is understandable that suitable strength and suitable NOx treating efficiency can be obtained in the honeycomb structure 1.

Next, the honeycomb structure 1 according to the embodiment of the present invention is specifically described.

[Honeycomb Unit]

As shown in FIG. 2, the honeycomb unit 2 of the honeycomb structure 1 has a so-called honeycomb structure having the plural cells 3 which are through holes arrayed in parallel. The cross-sectional shape of each cell 3 in the honeycomb unit 2 is not particularly limited. In FIG. 2, as an example, the cross-sectional shape of the cell 3 is square; however, the cross-sectional shape of the cell 3 can be triangular, hexagonal, circular, or a combination of an almost square with an almost octagon.

The aperture ratio of opening parts of the cells 3 to the cross-sectional area (many-cell opening area) of the honeycomb unit 2 in the direction perpendicular to the long length direction of the cells 3 is preferably 50 to 65%.

The aperture ratio of the honeycomb unit 2 is preferably 50% or more so that a pressure loss of exhaust gasses to be treated is not increased, and is preferably 65% or less so that a sufficient area of the cell walls 4 for treating the exhaust gasses is obtained.

The honeycomb unit 2 contains zeolite and an inorganic binder, and further can contain inorganic particles other than zeolite and/or inorganic fibers.

[Zeolite]

Zeolite in the honeycomb unit 2 is a substance in which zeolite particles are bound by an inorganic binder. As the zeolite, there are, for example, β-type zeolite, Y-type zeolite, ferrierite, ZSM-5-type zeolite, mordenite, faujasite, zeolite A, zeolite L, and the like. The above zeolite can be used solely, or the above two or more can be used by mixing.

As the zeolite, the mole ratio of silica to alumina (silica/alumina) is preferably 30 to 50.

In addition, the zeolite preferably contains ion exchanged zeolite of the above zeolite. The honeycomb unit 2 can be formed by using the ion exchanged zeolite or the ion exchange can be applied to the honeycomb unit 2 containing the zeolite after being formed. Ion exchanged zeolite is preferably used to which the ion exchange is applied by using at least one of metallic species of, for example, Fe, Cu, Ni, Co, Zn, Mn, Ti, Ag, and V. The ion exchanged zeolite can use one or more of the metallic species.

The amount of zeolite contained per apparent unit volume in the honeycomb unit 2 is preferably 230 to 270 g/L. When described in a different way, it is preferable that the zeolite contained ratio (composition ratio) in the honeycomb unit 2 be 60 to 80 mass%. Since the zeolite contributes to treat NOx, it is preferable that the contained amount of zeolite is large in the honeycomb unit 2. However, when only the amount of zeolite contained is increased, the contained amount of the other materials (for example, the inorganic fibers and the inorganic binder) must be decreased, and the strength of the honeycomb unit 2 is lowered. In addition, in order to increase the amount of zeolite contained, when the aperture ratio (opening ratio) is made to be too small, the flowing resistance of the exhaust gasses becomes great in the NOx treating action.

The zeolite preferably includes secondary particles, and the average particle diameter of the secondary particles is preferably 0.5 to 10 μm. The average particle diameter of the secondary particles can be measured by using zeolite particles as a raw material of which the secondary particles are formed before applying a firing process to an uncompleted honeycomb unit.

[Inorganic Particles]

The honeycomb unit 2 in the honeycomb structure 1 according to the embodiment of the present invention may contain inorganic particles other than the zeolite particles. The inorganic particles have a function to increase the strength of the honeycomb unit 2. In the honeycomb structure 1 according to the embodiment of the present invention, the inorganic particles other than the zeolite particles to be contained in the honeycomb unit 2 are not particularly limited. However, as the inorganic particles other than the zeolite particles, there are, for example, alumina particles, silica particles, zirconia particles, titania particles, ceria particles, mullite particles, a precursor of the above particles, and the like. The alumina particles and the zirconia particles are preferably used, and as the raw material, γ-alumina or boehmite is suitably used. In addition, one of the above inorganic particles other than the zeolite particles can be used solely, or the above two or more particles can be used.

The inorganic particles in the honeycomb unit 2 of the honeycomb structure 1 according to the embodiment of the present invention include a hydroxyl group before being fired as raw inorganic particles. Similar to many inorganic compound particles which can be industrially used, raw zeolite particles and raw inorganic particles before the honeycomb unit 2 of the honeycomb structure 1 is fired, include the hydroxyl group. When the honeycomb unit 2 is fired, the hydroxyl group generates a dehydration condensation reaction, and binding among the particles is strengthened. In particular, raw inorganic particles including alumina particles are firmly bound by the dehydration condensation reaction at the firing.

In the honeycomb unit 2 of the honeycomb structure 1 according to the embodiment of the present invention, it is preferable that the average particle diameter of the secondary particles of the raw inorganic particles equal the average particle diameter of the secondary particles of the zeolite particles or less. In particular, the average particle diameter of the secondary particles of the raw inorganic particles is preferably 1/10 to 1/1 the average particle diameter of the secondary particles of the zeolite particles. With this, the strength of the honeycomb unit 2 can be increased by the binding force of the inorganic particles whose average particle diameter is small.

The contained amount of the inorganic particles other than the zeolite particles in the honeycomb unit 2 is preferably 3 to 30 mass%, and more preferably 5 to 20 mass%. When the contained amount of the inorganic particles other than the zeolite particles in the honeycomb unit 2 is less than 3 mass%, contribution to increase the strength of the honeycomb unit 2 is lowered. When the contained amount of the inorganic particles other than the zeolite particles in the honeycomb unit 2 is more than 30 mass%, the contained amount of the zeolite particles for contributing to the NOx treatment becomes relatively small, and hence the NOx treating efficiency is lowered.

[Inorganic Binder]

In the honeycomb unit 2, since water and the like in the inorganic binder are evaporated, only solids content of the inorganic binder remains. When the inorganic binder in the honeycomb unit 2 is referred to, the solids content in the honeycomb unit 2 is referred to as the inorganic binder.

As the raw inorganic binder, there are, for example, inorganic sol, a clay based binder, and the like. The inorganic sol is, for example, alumina sol, silica sol, titania sol, meerschaum sol, attapulgite sol, liquid glass, or the like. The clay based binder is, for example, white clay, kaolin, montmorillonite, multiple chain type clay (meerschaum, attapulgite), or the like. In addition, as the inorganic sol and the clay based binder, one of the above materials can be used solely, or two or more of the above materials can be mixed.

As the solids content, the amount of the inorganic binder in the honeycomb unit 2 is preferably 5 to 30 mass%, and more preferably, 10 to 20 mass%. When the amount of the inorganic binder as the solids content in the honeycomb unit 2 is beyond the range of 5 to 30 mass%, molding-ability at forming the honeycomb unit 2 is lowered.

[Inorganic Fibers]

The honeycomb unit 2 in the honeycomb structure 1 according to the embodiment of the present invention contains inorganic fibers. The inorganic fibers to be contained in the honeycomb unit 2 are not particularly limited. For example, the inorganic fibers are alumina fibers, silica fibers, silicon carbide fibers, silica-alumina fibers, glass fibers, potassium titanate fibers, aluminum borate fibers, or the like. As the inorganic fibers, one of the inorganic fibers can be used solely, or two or more above inorganic fibers can be mixed. The raw inorganic fibers are mixed with the zeolite particles and the inorganic binder and the honeycomb unit 2 is molded by the mixed substance, and the molded body is fired. The inorganic fibers contribute to increase the strength of the honeycomb unit 2. As the inorganic fibers, in addition to long fibers, short fibers such as whiskers can be used.

The inorganic fibers are an inorganic material which has a large aspect ratio (fiber length/fiber diameter) and are particularly effective to increase the bending strength. The aspect ratio of the inorganic fibers is preferably 2 to 1000, more preferably, 5 to 800, and still more preferably, 10 to 500. When the aspect ratio of the inorganic fibers is less than 2, the contribution to increase the strength of the honeycomb unit 2 is small, and when the aspect ratio of the inorganic fibers is more than 1000, a clog is likely to be generated in a molding die at forming the honeycomb unit 2 by molding and the moldability may be lowered, and when the honeycomb unit 2 is formed by an extrusion molding, the inorganic fibers are broken, the lengths of the inorganic fibers are dispersed, and the strength of the honeycomb unit 2 may be lowered. In the above, when the aspect ratio has a distribution, the above aspect ratio signifies an average aspect ratio.

The amount of the inorganic fibers contained in the honeycomb unit 2 is preferably 3 to 50 mass%, more preferably, approximately 3 to 30 mass%, and still more preferably, 5 to 20 mass%. When the contained amount of the inorganic fibers in the honeycomb unit 2 is less than 3 mass%, the contribution to increase the strength of the honeycomb unit 2 is small, and when the contained amount of the inorganic fibers in the honeycomb unit 2 is more than 50 mass%, the contained amount of the zeolite particles for contributing to the NOx treatment becomes relatively small, and hence the NOx treating efficiency is lowered.

[Catalyst Components]

Catalyst components may be further carried on the cell walls 4 of the honeycomb unit 2 in the honeycomb structure 1 according to the embodiment of the present invention. The catalyst components are not particularly limited. However, the catalyst components may be formed of noble metal, an alkali metal compound, an alkali earth metal compound, or the like. As the noble metals, there are, for example, platinum, palladium, rhodium, or the like. One of the noble metal can be used solely, or two or more the noble metals can be mixed. As the alkali metal compounds, there are, for example, a single or a double or more compounds selected from a potassium compound, a sodium compound, and the like. In addition, as the alkali earth metal compounds, there are, for example, a barium compound and the like.

[Manufacturing Method of Honeycomb Unit]

Next, an example of a manufacturing method of the honeycomb unit 2 in the honeycomb structure 1 according to the embodiment of the present invention is described. First, a raw material paste containing zeolite particles and an inorganic binder as the main components is prepared, and a honeycomb unit molded body is formed of the raw material paste by using extrusion molding or the like. In addition, inorganic fibers, inorganic particles, an organic binder, a pore forming agent, a dispersion medium, a molding aid, and the like may be arbitrarily added to the raw material paste.

The organic binder is not particularly limited, and hence, as the organic binder, there are, for example, methylcellulose, carboxymethyl cellulose, hydroxylethyl cellulose, polyethyleneglycole, phenol resin, epoxy resin, and the like. One or more of the above organic binders can be selected. When the organic binder is added into the original raw material paste, the adding ratio of the organic binder to the original raw material paste, preferably, the inorganic binder is 1 to 10 mass% to the total 100 mass% of the solid components of the raw material paste.

As the pore forming agents, powders formed of acrylic acid based resin, polyolefin based resin, polystyrene based resin, polyester based resin, and the like can be used. The organic binder and the pore forming agent are important at the extrusion molding and to adjust the porosity of the honeycomb unit 2, and the amount of the pore forming agent is adjusted to obtain a desirable porosity.

The dispersion medium is not particularly limited. As the dispersion medium, there are, for example, water, organic solvent (for example, toluene), alcohol (for example, methanol), and the like. The molding aid is not particularly limited, as the molding aid, there are, for example, ethylene glycol, dextrin, fatty acid soap, polyalcohol, and the like.

The raw material paste is not particularly limited; however, it is preferably mixed and kneaded. The raw material paste can be sufficiently mixed by using a mixer, an attritor (grinding mill), or the like, and can be sufficiently kneaded by a kneader or the like.

The molding method of the raw material paste is not particularly limited; however, a honeycomb unit molded body is preferably formed by using, for example, an extrusion molding method or the like so that the honeycomb unit molded body has a predetermined cell density and a predetermined aperture ratio.

Next, the honeycomb unit molded body is dried. A drying apparatus for drying the honeycomb unit molded body is not particularly limited. As the drying apparatus, there are, for example, a microwave drying apparatus, a hot air drying apparatus, a dielectric drying apparatus, a reduced pressure drying apparatus, a vacuum drying apparatus, a freeze drying apparatus, and the like. The dried honeycomb unit molded body is preferably degreased. The degreasing conditions are not particularly limited and are determined depending on the amount and kind of organic substances contained in the honeycomb unit molded body; however, the honeycomb unit molded body is degreased under the conditions of at approximately 400 °C for 2 hours.

Further, the dried and degreased honeycomb unit molded body is preferably fired. The firing conditions are not particularly limited; however, are preferably at 600 to 1200 °C for approximately 2 hours, more preferably at 600 to 1000 °C for approximately 2 hours. When the firing temperature is less than 600 °C, the sintering does not progress, and the strength of the honeycomb unit 2 may be hardly increased. When the firing temperature is more than 1200 °C, since zeolite crystals are broken and the sintering is too progressed, the honeycomb unit 2 having a porous property with a suitable aperture ratio cannot be formed.

[Honeycomb Structure]

The honeycomb structure 1 according to the embodiment of the present invention includes one or more honeycomb units 2. In the honeycomb structure 1 including the plural honeycomb units 2, the plural honeycomb units 2 are stacked so that the through holes of the cells 3 in each honeycomb unit 2 face in the same direction. Examples of the honeycomb structures 1 according to the embodiment of the present invention are shown in corresponding perspective views of FIGs. 1A and 1B. The honeycomb structure 1 shown in FIG. 1A is formed so that the plural honeycomb units 2 are adhered by the adhesive layers 5. In each of the honeycomb units 2, the long length directions of the cells 3 are arrayed in parallel. The honeycomb structure 1 shown in FIG. 1B is an example in which the honeycomb structure 1 is formed of one honeycomb unit 2. As described above, the honeycomb structure 1 may be formed of one honeycomb unit 2 or plural honeycomb units 2. The side surface (surface parallel to the long length direction of the cells 3, in some cases, hereinafter is simply referred to as a side face) is preferably covered with the coating material layer 6 so as to increase the strength of the honeycomb structure 1.

In the honeycomb structures 1 shown in FIGs. 1A and 1B, the cross-sectional face has a circular shape; however, the cross-sectional face may have any shape, for example, a square shape, a rectangular shape, a hexagonal shape, a fan shape, and the like. The cross-sectional shape of the honeycomb structure 1 can be determined depending on using conditions. However, the cross-sectional area in the long length direction of the honeycomb structure 1 is preferably the same. In addition, a cutting process may be applied or not be applied to a peripheral surface of the honeycomb structure 1.

[Manufacturing Method of Honeycomb Structure]

A manufacturing method of the honeycomb structure 1 formed of the plural honeycomb units 2 shown in FIG. 1A is described. The honeycomb units 2 obtained by the above manufacturing method are sequentially adhered to each other by applying an adhesive onto the sides of the honeycomb units 2. With this, a honeycomb unit aggregated body having a predetermined size is obtained by being dried and solidified. In addition, a cutting process is applied to the side face of the honeycomb unit aggregated body, and a honeycomb structure having a predetermined shape is formed.

The adhesive is not particularly limited. As the adhesive, for example, a substance mixing an inorganic binder with inorganic fibers, a substance mixing an inorganic binder with inorganic particles and inorganic fibers, or the like can be used. In addition, an organic binder may be added to the above adhesive. The organic binder is not particularly limited. As the organic binder, there are, for example, polyvinyl alcohol, methylcellulose, ethylcellulose, carboxymethyl cellulose, and the like, and one or more of the above organic binders can be selected.

The thickness of the adhesive layer 5 for adhering the plural honeycomb units 2 is preferably, 0.5 to 2.0 mm. The number of the honeycomb units 2 to be adhered can be arbitrarily determined depending on the size of the honeycomb structure 1. A cutting process and/or a polishing process can be applied to the honeycomb unit aggregated body formed by adhering the plural honeycomb units 2 for obtaining the honeycomb structure 1 having a desirable shape.

The coating material layer 6 is formed on a peripheral surface of the honeycomb structure 1 where the through holes of the cells 3 are not formed by applying a coating material and drying and solidifying the coating material. With this, the peripheral surface of the honeycomb structure 1 is protected and the strength of the honeycomb structure 1 can be increased. The coating material is not particularly limited, and may be the same as the material of the adhesive layer 5, or may be different from the material of the adhesive layer 5. The compounding ratio of the coating material may be the same as that of the adhesive or may be different from the adhesive. The thickness of the coating material layer 6 is not particularly limited, but is preferably 0.1 mm to 2.0 mm. The coating material layer 6 may be or may not be formed.

After adhering the plural honeycomb units 2 by using the adhesive, heat treatment is preferably applied to the adhered honeycomb units 2. When the coating material layer 6 is formed, a degreasing process is preferably applied after forming the adhesive layers 5 and the coating material layer 6. When the adhesive layers 5 and the coating material layer 6 contain an organic binder, the organic binder can be degreased by the degreasing process. The degreasing conditions can be arbitrarily determined depending on the contained amount and kind of the organic binder; however, the degreasing conditions are preferably at approximately 700 °C for approximately 2 hours.

As an example of a honeycomb structure, the honeycomb structure 1 having a cylindrical shape is shown in FIG. 1A in which plural honeycomb units 2 having a rectangular pillar shape whose cross section perpendicular to the long length direction of cells 3 is a square are adhered. In the honeycomb structure 1, the honeycomb units 2 are adhered by interposing the adhesive layer 5, the outer peripheral is cut to have the cylindrical shape, and the coating material layer 6 is formed on the peripheral surface. For example, when honeycomb units 2 having a fan shape as cross section and a square shape as cross section are formed and the honeycomb units 2 are adhered to have a predetermined shape of the honeycomb structure 1, the cutting process and the polishing process can be omitted.

Next, a manufacturing method of the honeycomb structure 1 formed of one honeycomb unit 2 shown in FIG. 1B is described. The honeycomb structure 1 formed of one honeycomb unit 2 shown in FIG. 1B can be formed by a method similar to the manufacturing method of the honeycomb structure 1 formed of the plural honeycomb units 2 shown in FIG. 1A. In addition, if necessary, in order to have a cylindrical shape, the honeycomb structure 1 is formed by being subjected to a cutting and/or a polishing process and by forming the coating material layer 6 on the peripheral surface with the use of the same material of the adhesive and the degreasing process is applied. With this, the honeycomb structure 1 formed of one honeycomb unit 2 can be formed.

[Examples]

Next, examples of the honeycomb structures manufactured under several conditions are described. However, the embodiment of the present invention is not limited to the examples.

[Example 1]

[Manufacturing of Honeycomb Unit]

First, 2300 parts by mass of Fe-zeolite particles (3 mass% of Fe ion exchanged β-type zeolite, the silica/alumina ratio is 40, the specific surface area is 110 m²/g, and the average particle diameter is 2 μm (the average diameter is the average diameter of the secondary particles; the description below is the same)), 680 parts by mass of γ alumina particles (the average diameter is 2 μm), 680 parts by mass of alumina fibers (the average fiber diameter is 6 μm and the average fiber length is 100 μm), 2600 parts by mass of alumina sol (the solids content is 20 mass%), and 410 parts by mass of methylcellulose as an organic binder were added and mixed. Further, a small amount of platicizer, a surfactant, and a lubricant was added to the mixed substance, and the added substance was mixed and kneaded while adjusting the viscosity by adding water. With this, a mixture composition substance for molding was obtained. Then a honeycomb unit molded body was obtained by molding the mixture composition substance with the use of an extrusion molding machine. The Fe ion exchanged β-type zeolite was obtained by performing a Fe ion exchange while zeolite particles were soaked in a ferric nitrate ammonium solution. The ion exchanged amount was obtained by an IPC luminescent analysis with the use of an ICPS-8100 (a product of Shimadzu).

Next, the honeycomb unit molded body was sufficiently dried and degreased by using a microwave drying apparatus and a hot air drying apparatus at 400 °C for 2 hours. Then firing was applied to the dried and degreased honeycomb unit molded body at 700 °C for 2 hours. With this, the honeycomb unit 2 was formed. In the obtained honeycomb unit 2, the shape was a rectangular pillar (cross section 35 mm × 35 mm × length 150 mm), the thickness of the cell wall was 0.15 mm, the cell density was 160 pieces per cm², the porosity was 28%, the aperture ratio is 60%, the amount of zeolite contained per apparent unit volume was 250 g/L, and the cell shape was a square. The porosity of the cell wall 4 of the honeycomb unit 2 was measured by a mercury intrusion method.

In Table 1, blending amounts of raw materials of Fe-zeolite particles and the like used to form the honeycomb unit 2; the cell structure (the thickness of the cell wall X and the cell density), the porosity Y, the upper limit and lower limit of Y in Mathematical Formula [1], the zeolite contained amount in the honeycomb unit 2 and the like are shown.

[Table 1]

| | Fe-ZEOLITE | γ ALUMINA | ALUMINA FIBERS | PORE FORMING AGENT | CELL STRUCTURE | | POROSITY Y | MATHEMATICAL FORMULA [1] | | ZEOLITE CONTAINED AMOUNT | EVALUATION | |
|---|---|---|---|---|---|---|---|---|---|---|---|---|
| | BLENDING AMOUNT | BLENDING AMOUNT | BLENDING AMOUNT | BLENDING AMOUNT | THICKNESS OF CELL WALL X | CELL DENSITY | | LOWER LIMIT OF Y | UPPER LIMIT OF Y | | BENDING STRENGTH | NOx TREAT-ING EFFI-CIENCY |
| | - | - | - | - | mm | pieces/cm$^2$ | % | 40X+20 | 40X+30 | g/L | MPa | (%) |
| EXAMPLE 1 | 2300 | 680 | 680 | 0 | 0.15 | 160 | 28 | 26 | 36 | 250 | 4.0 | 90 |
| EXAMPLE 2 | 2220 | 410 | 780 | 120 | 0.15 | 160 | 33 | 26 | 36 | 250 | 3.2 | 96 |
| EXAMPLE 3 | 2220 | 410 | 780 | 120 | 0.25 | 60 | 33 | 30 | 40 | 250 | 3.5 | 90 |
| EXAMPLE 4 | 2150 | 190 | 780 | 300 | 0.25 | 60 | 38 | 30 | 40 | 250 | 2.3 | 95 |
| EXAMPLE 5 | 2150 | 190 | 780 | 300 | 0.35 | 30 | 38 | 34 | 44 | 250 | 2.7 | 89 |
| EXAMPLE 6 | 2150 | 0 | 650 | 600 | 0.35 | 30 | 43 | 34 | 44 | 250 | 2.2 | 95 |
| COMPARATIVE EXAMPLE 1 | 2365 | 1000 | 430 | 0 | 0.15 | 160 | 23 | 26 | 36 | 250 | 3.0 | 78 |
| COMPARATIVE EXAMPLE 2 | 2150 | 190 | 780 | 300 | 0.15 | 160 | 38 | 26 | 36 | 250 | 1.9 | 99 |
| COMPARATIVE EXAMPLE 3 | 2300 | 680 | 680 | 0 | 0.25 | 60 | 28 | 30 | 40 | 250 | 4.2 | 76 |
| COMPARATIVE EXAMPLE 4 | 2150 | 0 | 650 | 600 | 0.25 | 60 | 43 | 30 | 40 | 250 | 1.9 | 98 |
| COMPARATIVE EXAMPLE 5 | 2220 | 410 | 780 | 120 | 0.35 | 30 | 33 | 34 | 44 | 250 | 3.7 | 74 |
| COMPARATIVE EXAMPLE 6 | 2150 | 0 | 0 | 1250 | 0.35 | 30 | 48 | 34 | 44 | 250 | 0.8 | 96 |

(continued)

| | Fe-ZEOLITE | γ ALUMINA | ALUMINA FIBERS | PORE FORMING AGENT | CELL STRUCTURE | | POROSITY Y | MATHEMATICAL FORMULA [1] | | ZEOLITE CONTAINED AMOUNT | EVALUATION | |
|---|---|---|---|---|---|---|---|---|---|---|---|---|
| | BLENDING AMOUNT | BLENDING AMOUNT | BLENDING AMOUNT | BLENDING AMOUNT | THICKNESS OF CELL WALL X | CELL DENSITY | | LOWER LIMIT OF Y | UPPER LIMIT OF Y | | BENDING STRENGTH | NOx TREAT-ING EFFI-CIENCY |
| | - | - | - | - | mm | pieces/cm$^2$ | % | 40X+20 | 40X+30 | g/L | MPa | (%) |
| COMPARA-TIVE EXAMPLE 7 | 2150 | 0 | 650 | 600 | 0.40 | 25 | 43 | 36 | 46 | 250 | 2.6 | 78 |

[Manufacturing of Honeycomb Structure]

Next, a paste of adhesive was applied onto the side faces of the formed honeycomb units 2 so that the thickness of the adhesive layer 5 became 1 mm, and a honeycomb unit aggregated body having a nearly rectangular pillar shape was formed in which the four honeycomb units 2 were arrayed in the row direction and the four honeycomb units 2 were arrayed in the column direction by being adhered and the honeycomb unit aggregated body was dried and solidified at 120 °C for two hours.

The paste of the adhesive layer 5 was prepared by mixing 29 mass% of aluminum particles (the average particle diameter is 2 $\mu$m), 7 mass% of alumina fibers (the average fiber diameter is 6 $\mu$m, and the average fiber length is 100 $\mu$m), 34 mass% of alumina sol (the solids content 20 mass%), 5 mass% of carboxymethyl cellulose, and 25 mass% of water.

The side faces of the honeycomb unit aggregated body were cut by using a diamond cutter so that the honeycomb unit aggregated body had a cylindrical shape. The paste of the adhesive is applied onto the peripheral surface of the honeycomb unit aggregated body having the cylindrical shape so that the coating material layer 6 of 0.5 mm thickness was formed. With this, the honeycomb unit aggregated body having the same structure as that of the honeycomb structure 1 shown in FIG. 1A was formed. The honeycomb unit aggregated body having the cylindrical shape was dried and solidified at 120 °C for two hours, and the adhesive layers 5 and the coating layer 6 were degreased at 700 °C for two hours. With this, a cylindrical-shaped honeycomb structure 1 (the diameter is 144 mm, and the length is 150 mm) was obtained.

[Examples 2 through 6 and Comparative Examples 1 through 7]

In Table 1, in examples 2 through 6 and comparative examples 1 through 7, the blending amounts of the Fe-zeolite, the $\gamma$ alumina, the alumina fibers, acrylic resin powders as the pore forming agent (the particle diameter is 0.2 $\mu$m); and the cell structure (the thickness of the cell wall X and the cell density) are changed from the example 1. Then the corresponding honeycomb structures including the honeycomb units were formed in the examples 2 through 6 and the comparative examples 1 through 7. In Table 1, in addition to the above changed matters, the porosity, the upper limit and the lower limit of the porosity Y in Mathematical Formula [1], the zeolite contained amount, and the like are shown.

[Evaluation of Performance of Honeycomb Structure]

Evaluated results of the bending strength of each of the honeycomb units and the NOx treating efficiency of each of the honeycomb structures formed in the examples 1 through 6 and the comparative examples 1 through 7 are shown in Table 1.

[Measurement of Bending Strength]

The bending strength of the honeycomb unit was measured by applying a three-point bending test complying with JIS-R1601 to each of the honeycomb units (rectangular pillar shape of 35 mm $\times$ 35 mm $\times$ 150 mm) formed in the examples 1 through 6 and the comparative examples 1 through 7. Specifically, Instron 5582 (a product of Instron) was used as the measuring apparatus, a breaking load W is applied to the direction perpendicular to the honeycomb unit in the span L = 135 mm, and the crosshead speed = 1 mm/min. In the calculation of the bending strength $\sigma$, a second moment of area Z in which moment of the hollow parts of cells is subtracted has been calculated, and the following Equation was used.

$$\sigma = WL/4Z$$

[Measurement of NOx Treating Efficiency]

Cylindrical-shaped honeycombs whose diameter is 30 mm and length is 50 mm were cut off from the honeycomb units of the examples 1 through 6 and the comparative examples 1 through 7, and the cut off honeycombs were used as samples for evaluation. After applying a simulation aging to the samples for evaluation by heating at 700 °C for 48 hours, the temperature was sustained at 300 °C, simulation gasses of automotive exhaust gasses whose composition is shown in Table 2 were heated at 300 °C, and were introduced by SV35000 (space velocity of 35000/hr). Then, a reduction rate (%) of NO components in the simulation gases between the start of simulation and the end of the simulation was determined to be NOx treating efficiency (%). In Table 2, the SV is also shown.

[Table 2]

| Simulation | MIXED AMOUNT |
|------------|--------------|
| $N_2$ | Balance |
| $CO_2$ | 5 vol% |
| $O_2$ | 14 vol% |
| NO | 350 ppm |
| $NH_3$ | 350 ppm |
| $H_2O$ | 5 vol% |
| SV | 35000/hr |

It is understandable from the results shown in Table 1 that the bending strength of the honeycomb unit of the honeycomb structures of the examples 1 through 6 were relatively high from 2.2 MPa to 4.0 MPa, and the bending strength of the honeycomb unit of the honeycomb structures of the comparative examples 2, 4, and 6 whose porosity Y was beyond the upper limit in Mathematical Formula [1] were low at 1.9, 1.9, and 0.8, respectively.

In addition, the NOx treating efficiency of the honeycomb structures (samples for evaluation) of the examples 1 through 6 was high with 89 to 96%. However, the NOx treating efficiency of the comparative examples 1, 3, and 5 whose porosity Y was below the lower limit in Mathematical Formula [1] and the comparative example 7 whose thickness of the cell walls X is beyond the upper limit (0.35 mm) in Mathematical Formula [2] was lower than 80%.

A relationship between the thickness of the cell wall X and the porosity Y of the cell wall X according to the examples 1 through 6 and the comparative examples 1 through 7 is shown in a graph of FIG. 3. In FIG. 3, the horizontal axis shows the thickness of the cell wall X and the vertical axis shows the porosity Y of the cell wall. In addition, the examples 1 through 6 are shown by "○" and the comparative examples 1 through 7 are shown by "Δ", and the numeral attached to the "○" and the "Δ" shows the number of the corresponding examples 1 through 6 and the comparative examples 1 through 7.

It is understandable from the graph shown in FIG. 3 that the honeycomb units of the honeycomb structures of the examples 1 through 6 are within a region satisfying Mathematical Formulae [1] and [2], and the honeycomb units of the honeycomb structures of the comparative examples 1 through 7 are outside the region satisfying Mathematical Formulae [1] and [2].

Therefore, it is understandable that a honeycomb structure suitable for treating automotive exhaust gases having both suitable bending strength of the honeycomb unit and suitable NOx treating efficiency of the honeycomb structure is obtained when the honeycomb structure is within the region satisfying Mathematical Formulae [1] and [2].

[Industrial Applicability]

Since the honeycomb structure according to the embodiment of the present invention has high strength and high NOx treating efficiency, the honeycomb structure can be used as a catalyst for treating automotive exhaust gasses which is required to be small-sized and light weight. In particular, the honeycomb structure is suitable as a NOx treating catalyst for the SCR system (for example, a diesel engine exhaust gas treating system using ammonia) using zeolite.

Further, the present invention is not limited to the embodiment, but variations and modifications may be made without departing from the scope of the present invention.

**Claims**

1.  A honeycomb structure (1), comprising:

a honeycomb unit (2) containing zeolite and an inorganic binder and having a shape in which a plurality of cells (3) extending from one end to the another end along the long length direction of the honeycomb unit (2) are separated by cell walls (4), **characterized in that** the honeycomb unit (2) includes inorganic fibers, an amount of zeolite contained per apparent unit volume of the honeycomb unit (2) is 230 g/L or more, and mathematical formulae [1] and [2] are satisfied when the thickness of the cell wall (4) is defined as X mm, and the porosity of the cell wall (4) is defined as Y%:

$$40X + 20 \leq Y \leq 40X + 30 \cdots [1]$$

$$0.15 \leq X \leq 0.35 \cdots [2].$$

**2.** The honeycomb structure (1) as claimed in claim 1, **characterized in that**
the amount of zeolite contained per apparent unit volume of the honeycomb unit (2) is 270 g/L or less.

**3.** The honeycomb structure (1) as claimed in claim 1 or 2, **characterized in that**
an aperture ratio of the honeycomb unit (2) is 50% to 65%.

**4.** The honeycomb structure (1) as claimed in any one of claims 1 through 3, **characterized in that**
the zeolite includes at least one of β-type zeolite, Y-type zeolite, ferrierite, ZSM-5-type zeolite, mordenite, faujasite, zeolite A, and zeolite L.

**5.** The honeycomb structure (1) as claimed in any one of claims 1 through 4, **characterized in that**
a mole ratio of silica to alumina (silica/alumina) in the zeolite is 30 to 50.

**6.** The honeycomb structure (1) as claimed in any one of claims 1 through 5, **characterized in that**
the zeolite is ion-exchanged zeolite by using at least one of Fe, Cu, Ni, Co, Zn, Mn, Ti, Ag, and V.

**7.** The honeycomb structure (1) as claimed in any one of claims 1 through 6, **characterized in that**
the honeycomb unit (2) includes at least one of alumina particles, titania particles, silica particles, zirconia particles, and a precursor of the above particles.

**8.** The honeycomb structure (1) as claimed in any one of claims 1 through 7, **characterized in that**
the inorganic binder includes at least one of alumina sol, silica sol, titania sol, liquid glass, meerschaum sol, and attapulgite sol.

**9.** The honeycomb structure (1) as claimed in claim 1, **characterized in that**
the inorganic fibers include at least one of alumina fibers, silica fibers, silicon carbide fibers, silica-alumina fibers, glass fibers, potassium titanate fibers, and aluminum borate fibers.

**10.** The honeycomb structure (1) as claimed in any one of claims 1 through 9, **characterized in that**
a plurality of the honeycomb units (2) are adhered together by interposing an adhesive.

**Patentansprüche**

**1.** Wabenstruktur (1) umfassend:

eine Wabeneinheit (2), die Zeolith und ein anorganisches Bindemittel enthält und eine Form aufweist, in der eine Vielzahl von Zellen (3), die sich von einem Ende zum anderen Ende entlang der Längsrichtung der Wabeneinheit (2) erstrecken, durch Zellwände (4) getrennt sind, **dadurch gekennzeichnet, dass**
die Wabeneinheit (2) anorganische Fasern enthält,
die Menge des pro scheinbarem Einheitsvolumen der Wabeneinheit (2) enthaltenen Zeoliths 230 g/L oder mehr beträgt, und
die mathematischen Formeln [1] und [2] erfüllt sind, wenn die Dicke der Zellwand (4) als X mm definiert ist und die Porosität der Zellwand (4) als Y % definiert ist:

$$40X + 20 \leq Y \leq 40X + 30 \qquad ... [1]$$

$$0{,}15 \leq X \leq 0{,}35 \qquad ... [2].$$

**2.** Wabenstruktur (1) gemäß Anspruch 1, **dadurch gekennzeichnet, dass** die Menge des pro scheinbarem Einheitsvolumen der Wabeneinheit (2) enthaltenen Zeoliths 270 g/L oder weniger beträgt.

**3.** Wabenstruktur (1) gemäß Anspruch 1 oder 2, **dadurch gekennzeichnet, dass** das Öffnungsverhältnis der Wabeneinheit (2) 50 % bis 65 % beträgt.

**4.** Wabenstruktur (1) gemäß einem der Ansprüche 1 bis 3, **dadurch gekennzeichnet, dass** der Zeolith wenigstens eines von Zeolith vom β-Typ, Zeolith vom Y-Typ, Ferrierit, Zeolith vom ZSM-5-Typ, Mordenit, Faujasit, Zeolith A und Zeolith L einschließt.

**5.** Wabenstruktur (1) gemäß einem der Ansprüche 1 bis 4, **dadurch gekennzeichnet, dass** das Molverhältnis von Silica zu Alumina (Silica/Alumina) in dem Zeolith 30 bis 50 beträgt.

**6.** Wabenstruktur (1) gemäß einem der Ansprüche 1 bis 5, **dadurch gekennzeichnet, dass** der Zeolith Ionenausgetauschter Zeolith unter Verwendung von wenigstens einem von Fe, Cu, Ni, Co, Zn, Mn, Ti, Ag und V ist.

**7.** Wabenstruktur (1) gemäß einem der Ansprüche 1 bis 6, **dadurch gekennzeichnet, dass** die Wabeneinheit (2) wenigstens eines von Aluminateilchen, Titaniateilchen, Silicateilchen, Zirconiateilchen und einem Vorläufer der obengenannten Teilchen einschließt.

**8.** Wabenstruktur (1) gemäß einem der Ansprüche 1 bis 7, **dadurch gekennzeichnet, dass** das anorganische Bindemittel wenigstens eines von Aluminasol, Silicasol, Titaniasol, Wasserglas, Meerschaumsol und Attapulgitsol einschließt.

**9.** Wabenstruktur (1) gemäß Anspruch 1, **dadurch gekennzeichnet, dass** die anorganischen Fasern wenigstens eine von Aluminafasern, Silicafasern, Siliziumcarbidfasern, Silica-Alumina-Fasern, Glasfasern, Kalium-Titanat-Fasern und Aluminium-Borat-Fasern einschließt.

**10.** Wabenstruktur (1) gemäß einem der Ansprüche 1 bis 9, **dadurch gekennzeichnet, dass** eine Vielzahl der Wabeneinheiten (2) miteinander verklebt sind, indem ein Klebstoff dazwischen angeordnet ist.

**Revendications**

**1.** Structure en nid d'abeilles (1), comprenant :

une unité en nid d'abeilles (2) contenant une zéolite et un liant inorganique et ayant une forme dans laquelle une pluralité de cellules (3) s'étendant depuis une extrémité jusqu'à l'autre extrémité le long de la direction de grande longueur de l'unité en nid d'abeilles (2) sont séparées par des parois de cellules (4), **caractérisée en ce que**
l'unité en nid d'abeilles (2) comporte des fibres inorganiques,
une quantité de zéolite contenue par volume unitaire apparent de l'unité en nid d'abeilles (2) est supérieure ou égale à 230 g/L, et
des formules mathématiques [1] et [2] sont satisfaites lorsque l'épaisseur de la paroi de cellule (4) est définie comme étant X mm, et la porosité de la paroi de cellule (4) est définie comme étant Y% :

$$40X + 20 \leq Y \leq 40X + 30 \ldots [1]$$

$$0,15 \leq X \leq 0,35 \ldots [2].$$

**2.** Structure en nid d'abeilles (1) telle que revendiquée dans la revendication 1, **caractérisée en ce que** la quantité de zéolite contenue par volume unitaire apparent de l'unité en nid d'abeilles (2) est inférieure ou égale à 270 g/L.

**3.** Structure en nid d'abeilles (1) telle que revendiquée dans la revendication 1 ou 2, **caractérisée en ce que**

un rapport d'ouverture de l'unité en nid d'abeilles (2) est compris entre 50% et 65%.

4. Structure en nid d'abeilles (1) telle que revendiquée dans l'une quelconque des revendications 1 à 3, **caractérisée en ce que**
la zéolite comporte au moins un élément parmi la zéolite de type β, la zéolithe de type Y, la ferriérite, la zéolite de type ZSM-5, la mordénite, la faujasite, la zéolite A, et la zéolite L.

5. Structure en nid d'abeilles (1) telle que revendiquée dans l'une quelconque des revendications 1 à 4, **caractérisée en ce que**
un rapport moléculaire de la silice sur l'alumine (silice/alumine) dans la zéolite est compris entre 30 et 50.

6. Structure en nid d'abeilles (1) telle que revendiquée dans l'une quelconque des revendications 1 à 5, **caractérisée en ce que**
la zéolite est une zéolite ayant subi un échange d'ions en utilisant au moins un élément parmi Fe, Cu, Ni, Co, Zn, Mn, Ti, Ag, et V.

7. Structure en nid d'abeilles (1) telle que revendiquée dans l'une quelconque des revendications 1 à 6, **caractérisée en ce que**
l'unité en nid d'abeilles (2) comporte au moins un élément parmi des particules d'alumine, des particules de dioxyde de titane, des particules de silice, des particules de zircone et un précurseur des particules ci-dessus.

8. Structure en nid d'abeilles (1) telle que revendiquée dans l'une quelconque des revendications 1 à 7, **caractérisée en ce que**
le liant inorganique comporte au moins un élément parmi un sol d'alumine, un sol de silice, un sol de dioxyde de titane, un verre liquide, un sol d'écume de mer, et un sol d'attapulgite.

9. Structure en nid d'abeilles (1) telle que revendiquée dans la revendication 1, **caractérisée en ce que**
les fibres inorganiques comportent au moins des fibres parmi des fibres d'alumine, des fibres de silice, des fibres de carbure de silicium, des fibres de silice-alumine, des fibres de verre, des fibres de titanate de potassium et des fibres de borate d'aluminium.

10. Structure en nid d'abeilles (1) telle que revendiquée dans l'une quelconque des revendications 1 à 9, **caractérisée en ce que**
une pluralité des unités en nid d'abeilles (2) sont collées les unes aux autres en interposant un adhésif.

## FIG.1A

## FIG.1B

# FIG.2

# FIG.3

EP 2 130 595 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005063653 A
- JP 2675321 B